# EUROPEAN PATENT APPLICATION

(11) **EP 3 193 390 A1**
(43) Date of publication of application: **19.07.2017**
(21) Application number: 16203929.1
(22) Date of filing: 14.12.2016
(51) Int. Cl.: H01M 2/34, H01M 10/44, H01M 2/30, H01M 2/04

(54) **SAFETY DEVICE FOR A RECHARGEABLE BATTERY CELL AND RECHARGEABLE BATTERY UNIT**

(30) Priority: 13.01.2016 JP 2016004558; 26.07.2016 WO PCT/EP2016/067724
(71) Applicant: Lithium Energy and Power GmbH & Co. KG, 70469 Stuttgart (DE)
(72) Inventor: Wilka, Marcel, Bosch Corporation, 532-0004 (JP)
(74) Representative: Bee, Joachim

(57) **Abstract**

The invention relates to a safety device (1) for a rechargeable battery cell, comprising: at least one first electrically conductive layer (2); at least one second electrically conductive layer (3); at least one separator layer (4) with at least one through hole (5) and being arranged between the first electrically conductive layer (2) and the second electrically conductive layer (3) to electrically separate the first electrically conductive layer (2) from the second electrically conductive layer (3); at least one first solder layer (7) which is at least partly arranged between the first electrically conductive layer (2) and the separator layer (4); at least one safety layer (6) which is at least partly arranged between the separator layer (4) and the second electrically conductive layer (3); and at least one second solder layer (8) which is at least partly arranged between the second electrically conductive layer (3) and the safety layer (6). The safety layer (6) is formed so that, when a temperature of the safety layer (6) exceeds a predetermined threshold temperature, an exothermic reaction of the safety layer material is triggered. The first solder layer (7) is melted due to heat generated by the exothermic reaction and/or the separator layer (4) changes its state of matter from solid to liquid or gas due to heat generated by the exothermic reaction.

## Description

### Prior Art

The invention relates to a safety device for a rechargeable battery cell and a rechargeable battery unit comprising such a safety device.

Recently, rechargeable battery cells, such as lithium ion cells, are used in different applications. For example, battery cells are installed in electric vehicles and hybrid electric vehicles to supply electric drive units of such vehicles with electric power. Generally, several battery cells are combined to form a battery unit with battery cells connected in series. The battery unit can be a rechargeable battery or a battery module for composing a modularly constructed rechargeable battery.

In general, lithium-ion-cells are considered to be unsafe. Therefore, measures must be developed that make lithium-ion-cells more safe, especially lithium-ion-cells with intrinsic unsafe materials.

For various reasons, for example when a battery cell is overcharged or deep discharged or has an internal short circuit, heat is generated within the battery cell causing overheating of the battery cell. This overheating may lead to a decomposition reaction of electrolyte and electrode within the defective battery cell generating gas inside of the battery cell. Then, a pressure within the battery cell increases due to the gas generation. This event is referred to as thermal runaway of a battery cell. A thermal runaway of one battery cell of a rechargeable battery unit with several battery cells may lead to a thermal runaway of further battery cells of the rechargeable battery unit. To prevent explosion of a battery cell in case of a thermal runaway, the battery cell may comprise a venting device for venting the battery cell and thereby reducing the pressure within the battery cell. Moreover, a thermal runaway of a battery cell may also cause an ignition of cell components of the battery cell.

To prevent a thermal runaway of a battery cell having an internal short circuit it is known to discharge the battery cell by some load, e.g. a resistor or the like. Such a safety measure may be triggered by a so-called battery management system (BMS) which monitors the condition of the battery cell. Since the battery cell should be discharged as fast as possible, the load should be large and heavy. Additionally, the heat generation in the battery cell and the energy consumption of the battery cell are still large when using such a conventional safety measure.

US 2014/113166 A1 discloses a safety device for arrangement in a battery cell of a lithium-ion battery. The safety device includes at least one metallic conductor configured in a planar form, in particular a metal plate or a metal foil. The conductor includes an insulating layer applied thereon and a terminal contact configured for the electrical connection to a terminal of the battery cell. The conductor has at least one heating resistor with a first contact and a second contact arranged on the insulating layer so as to enable an electric current to be passed through the heating resistor by way of the contacts.

US 2011/0129709 A1 discloses a pouch type secondary battery including a safety member. The pouch type secondary battery includes an electrode assembly including first and second electrode plates having opposite electrical polarities and a first separator between the first and second electrode plates; and a safety member including a first conductive plate located on an outside of the electrode assembly and electrically connected to the first electrode plate, a second conductive plate located on an outside of the first conductive plate and electrically connected to the second electrode plate, and an insulating plate between the first and second conductive plates for insulating the first and second conductive plates from each other, and the first conductive plate has a puncture strength that is greater than a puncture strength of the second conductive plate.

### Disclosure of the invention

It is an object of the present invention to improve discharging of a battery cell of a rechargeable battery unit.

This object is solved by the independent claims. Advantageous embodiments are disclosed in the following description, the dependent claims and the drawings, wherein these embodiments either by taken alone or in any combination of at least two embodiments with each other may relate to a preferred or advantageous aspect of the invention. Embodiments of the safety device may be embodiments of the rechargeable battery unit and vice versa, even if this is not explicitly disclosed in the following.

A safety device according to the present invention for a rechargeable battery cell comprises:
- at least one first electrically conductive layer connectable to a first electrode of the battery cell;
- at least one second electrically conductive layer connectable to a second electrode of the battery cell;
- at least one separator layer with at least one through hole and being arranged between the first electrically conductive layer and the second electrically conductive layer to electrically separate the first electrically conductive layer from the second electrically conductive layer;
- at least one first solder layer which is at least partly arranged between the first electrically conductive layer and the separator layer;
- at least one electrically conductive safety layer which is at least partly arranged between the separator layer and the second electrically conductive layer; and
- at least one second solder layer which is at least partly arranged between the second electrically conductive layer and the safety layer,
- wherein the safety layer is formed so that, when a temperature of the safety layer exceeds a predetermined threshold temperature, an exothermic reaction of the safety layer material is triggered, and
- the first solder layer is melted due to heat generated by the exothermic reaction and/or the separator layer changes its state of matter from solid to liquid or gas due to heat generated by the exothermic reaction.

When an electrically conductive object penetrates the safety device according to the invention which is electrically connected to the electrodes of the rechargeable battery cell, a short circuit is formed between the first electrically conductive layer and the second electrically conductive layer by said electrically conductive object. Through this, a large short circuit current flows through the electrically conductive object. This short circuit current generates heat which locally heats the first electrically conductive layer, the first solder layer, the separator layer, the safety layer, the second solder layer and the second electrically conductive layer. When the temperature of the safety layer locally exceeds the threshold temperature, an exothermic reaction of the material of the safety layer is triggered generating additional heat acting on the first solder layer to melt the first solder layer. The exothermic reaction propagates from the location, where the temperature for triggering the exothermic reaction is reached first, over the entire safety layer making the entire safety layer electrically conductive. Since the first solder layer is melted due to heat generated by the exothermic reaction, molten solder of the first solder layer flows in the through hole of the separator layer and contacts the electrically conductive safety layer. Through this, the first electrically conductive layer is electrically connected to the second electrically conductive layer via the molten solder of the first solder layer, the electrically conductive safety layer and the second solder layer. Preferably, the melting temperature of the solder of the first and/or second solder layer is low to ensure that the solder melts when the temperature of the safety layer exceeds the predetermined threshold temperature.

Alternately or additively, the separator layer changes its state of matter from solid to liquid or gas due to heat generated by the exothermic reaction of the material of the safety layer. Through this, a gap between the first solder layer and the safety layer is closed so that the solder (molten or solid) of the first solder layer contacts the safety layer. The fluid or gaseous separator material is pushed aside with the first solder layer and/or the safety layer. Therefore, the first electrically conductive layer is electrically connected to the second electrically conductive layer via the molten or solid solder of the first solder layer, the safety layer and the second solder layer.

Since the entire safety layer is electrically conductive a relative large cross-section area is provided by the electrically conductive safety layer for conducting a relative large current between the first electrically conductive layer and the second electrically conductive layer. The respective extend of the cross-section area for conducting a discharge current through the solder of the first solder layer depends, when the separator layer does not change its state of matter, on the size of the through hole of the separator layer and the number of through holes of the separator layer, since these through holes are filled with the molten solder of the first solder layer. Therefore, a large discharge current can flow in a very short time through the safety device, thereby bringing the rechargeable battery cell as fast as possible in a safe state. This especially also applies, when the separator layer changes its state of matter.

The safety device according to the present invention is a passive safety device. No additional activation device, such as an electronic or the like, is necessary. Therefore, the safety device according to the invention is inexpensive and space-saving and weight-saving.

The safety device according to the present invention may comprise two or more first electrically conductive layers connectable to a first electrode of the battery cell. Alternatively or additionally, the safety device according to the present invention may comprise two or more second electrically conductive layers connectable to a second electrode of the battery cell. The number of first and/or second electrically conductive layers can be selected regarding the desired intensity of the discharge current. The first and/or the second electrically conductive layer may be a metal foil or a metal plate.

The safety device according to the present invention may comprise two or more safety layers. The safety layer may be a foil or a plate.

According to an advantageous embodiment the safety device further comprises at least one sheathing at least partly accommodating the first electrically conductive layer, the second electrically conductive layer, the separator layer, the first solder layer, the safety layer and the second solder layer, wherein only a first planar-shaped connecting lug electrically connected to the first electrically conductive layer and a second planar-shaped connecting lug electrically connected to the second electrically conductive layer protrude from the sheathing. The sheathing may be bag-like and may be manufactured from a polyimide material being flexible, heat-resistant and chemically resistant. The planar-shaped connecting lugs have a relative large cross-section area to enable a large discharge current to flow through the safety device. A contact area between the respective connecting lug and the respective electrode of the battery cell may be relatively large due to the planar shape of the respective connecting lug.

A rechargeable battery unit according to the present invention comprises at least one rechargeable battery cell with a cell casing and at least one safety device according to one of the above described embodiments or any combination of at least two of these embodiments with each other, wherein the safety device is arranged inside or outside of the cell casing, and the at least one first electrically conductive layer of the safety device is electrically connected to a first electrode of the battery cell and the at least one second electrically conductive layer of the safety device is electrically connected to a second electrode of the battery cell.

The above described advantages of the safety device correspond to advantages of the rechargeable battery unit. If the rechargeable battery unit comprises two or more rechargeable battery cells it preferably comprises a corresponding number of safety devices each being dedicated to the respective battery cell. If one of the safety devices is activated, for example by penetrating the safety device with an electrically conductive object, heat generated by the activated safety device may be transferred to other safety devices of the battery unit leading to an activation of the other safety devices as well. Through this, the whole rechargeable battery unit can be brought in a safe state.

Because the entire safety device can be shaped planar, it can have a very small thickness without limiting its cross-section area for the large discharge current. This additionally makes it possible to integrate the safety device in a battery cell without the need for modifying the battery cell, which therefore may be a conventional battery cell. Alternately, the safety device may be located outside of the battery cell. However, since the entire safety device has a very small thickness and still a large cross-section area for the large discharge current, it can be integrated in the rechargeable battery unit without the need for modifying the battery unit, which therefore may be a conventional battery unit.

According to an advantageous embodiment the rechargeable battery unit further comprises at least one safety element electrically connected to one of the electrodes of the battery cell and being at least partly exposed to a pressure inside of the cell casing, wherein the safety element is at least party deformed and/or displaced from a passive state in an active state, when the pressure in the cell casing exceeds a predetermined threshold pressure, and the safety element electrically connects the one electrode of the battery cell to the electrically conductive layer of the safety device which is electrically connected to the other electrode of the battery cell. When the pressure within the cell casing increases above the predetermined threshold pressure, it acts on the safety element, so that the safety element is at least partly deformed and/or displaced, thereby bringing the safety element from its passive state in its active state. When the safety element is in its active state, a short circuit is established by at least one of the electrically conductive layers of the safety device allowing a large discharge current to flow through the safety device. The safety element is electrically conductive. The rechargeable battery unit may comprise two or more safety elements. Since the safety element is a passive safety element and no activation means are necessary for operating the safety element, the rechargeable battery unit is inexpensive and space-saving and weight-saving.

According to a further advantageous embodiment the cell casing comprises a first cap-shaped terminal element electrically connected to the first electrode of the battery cell and a second cap-shaped terminal element electrically connected to the second electrode of the battery cell and being spaced apart from the first cap-shaped terminal element, wherein the first electrically conductive layer and the second electrically conductive layer extend between side walls of the cap-shaped terminal elements, the first electrically conductive layer is electrically connected to the first cap-shaped terminal element and is spaced apart from the second cap-shaped terminal element, and the second electrically conductive layer is electrically connected to the second cap-shaped terminal element and is spaced apart from the first cap-shaped terminal element. When the battery cell is crushed so that a distance between the cap-shaped terminal elements is reduced, at least one cap-shaped terminal element contacts the respective electrically conductive layer that is electrically connected to the other cap-shaped terminal element in a non-crushed state of the battery cell. Through this, a large discharge current can flow through said electrically conductive layer, thereby generating heat that heats the safety layer to trigger the above described exothermic reaction of the safety layer. This is possible, because the electrically conductive layers of the safety device extend between side walls of the cap-shaped terminal elements. The cap-shaped terminal elements may be ashlar-formed. The cap-shaped terminal elements each encompass a section of the electrodes of the battery cell, wherein the electrodes may for an electrode stack or a jelly roll. Also according to this embodiment no activation means are necessary to enable a fast current discharge, so that the rechargeable battery unit is inexpensive and space-saving and weight-saving.

According to a further advantageous embodiment the cell casing is ashlar-formed and the safety device is located at two or more sides of the cell casing. In this case, the safety device is located outside of the battery cell. The more of the surface of the battery cell is covered by the safety device, the more likely the safety device is penetrated by an object impacting on the battery cell. Therefore, it is ensured that the battery cell can be brought to a safe state in various impact situations. The safety device may be located at two or more sides of the cell casing. Thus, the safety device may surround a portion of the battery cell partly or completely.

### Drawings

Further details, features and advantages of the invention are disclosed in the following description and the drawings showing:
- Figure 1: a schematic and perspective exploded view of an embodiment of a safety device according to the present invention;
- Figure 2: a schematic cross section of the safety device shown in Figure 1 in a passive state;
- Figure 3: a schematic cross section of the safety device shown in Figure 1 in an active state;
- Figure 4: a schematic and perspective view of an embodiment of a rechargeable battery unit according to the present invention;
- Figure 5: a schematic partial cross section of a further embodiment of a rechargeable battery unit according to the present invention in a passive state;
- Figure 6: a schematic partial cross section of the embodiment shown in Figure 5 in an active state;
- Figure 7: a schematic partial cross section of the embodiment shown in Figure 5 in a crushed state;
- Figure 8: a schematic view of a further embodiment of a rechargeable battery unit according to the present invention in a passive state; and
- Figure 9: a schematic view of the embodiment shown in Figure 8 in an active state.

### Preferred embodiments of the invention

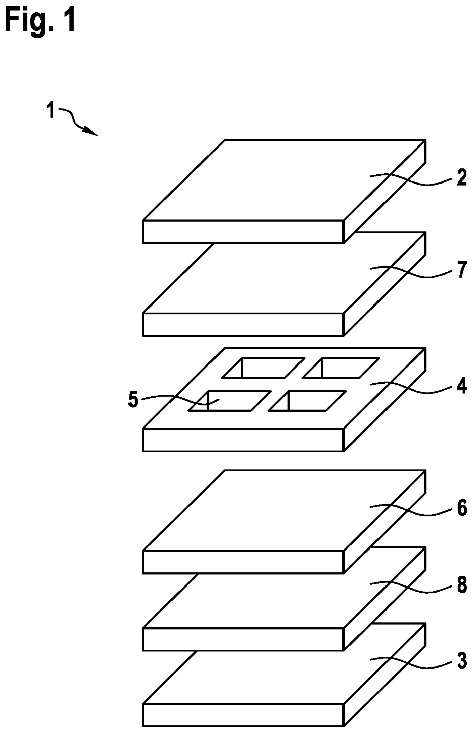

Figure 1 shows a schematic and perspective exploded view of an embodiment of a safety device 1 according to the present invention for a rechargeable battery cell (not shown).

The safety device 1 comprises a first electrically conductive layer 2 connectable to a first electrode (not shown) of the battery cell and a second electrically conductive layer 3 connectable to a second electrode (not shown) of the battery cell. The electrically conductive layers 2 and 3 may be metal foils.

Further, the safety device 2 comprises a separator layer 4 with four rectangular through holes 5 and being arranged between the first electrically conductive layer 2 and the second electrically conductive layer 3 to electrically separate the first electrically conductive layer 2 from the second electrically conductive layer 3.

The safety device 1 comprises a electrically conductive safety layer 6 which is at least partly arranged between the separator layer 4 and the second electrically conductive layer 3. The safety layer 6 is formed so that, when a temperature of the safety layer 6 exceeds a predetermined threshold temperature, an exothermic reaction of the safety layer 6 material is triggered.

Moreover, the safety device 1 comprises a first solder layer 7 which is at least partly arranged between the first electrically conductive layer 2 and the separator layer 4. The first solder layer 7 is melted, when heat is generated by the exothermic reaction of the safety layer 6. Alternately or additively, the separator layer 4 changes its state of matter from solid to liquid or gas, when heat is generated by the exothermic reaction of the safety layer 6.

Furthermore, the safety device 1 comprises a second solder layer 8 which is at least partly arranged between the second electrically conductive layer 3 and the safety layer 6.

The safety device 1 may comprise at least one flexible sheathing (not shown) at least partly accommodating the first electrically conductive layer 2, the second electrically conductive layer 3, the separator layer 4, the first solder layer 7, the safety layer 6 and the second solder layer 8. Only a first planar-shaped connecting lug (not shown) electrically connected to the first electrically conductive layer 2 and a second planar-shaped connecting lug (not shown) electrically connected to the second electrically conductive layer 3 may protrude from the sheathing. The sheathing may be made from polyimide.

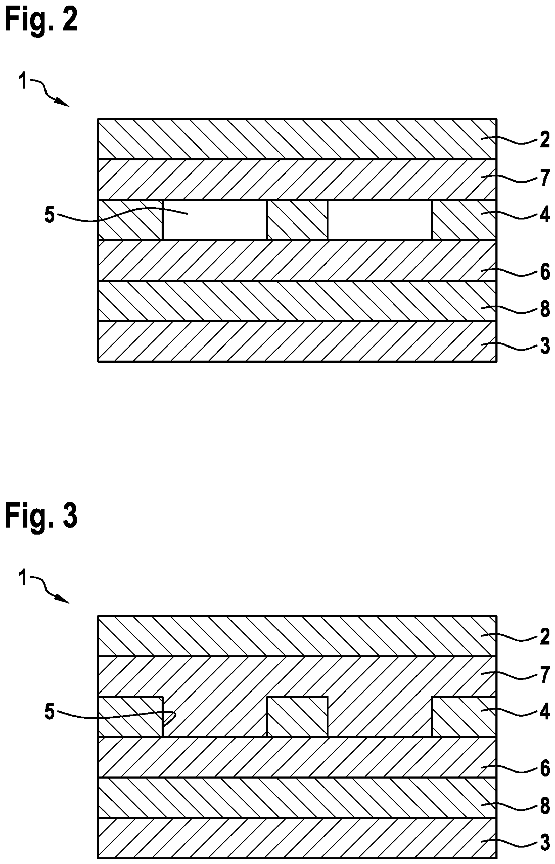

Figure 2 shows a schematic cross section of the safety device 1 shown in Figure 1 in a passive state. In the passive state, the safety device 1 is not heated by a discharge current so that the exothermic reaction of the safety layer 6 is not triggered, and therefore, the first solder layer 7 is not melted. Therefore, the trough holes 5 of the separator layer 4 are filled with air.

Figure 3 shows a schematic cross section of the safety device 1 shown in Figure 1 in an active state. In the active state, a discharge current flows through the safety device 1, thereby heating the safety layer 6 above the predetermined threshold temperature so that the exothermic reaction of the material of the safety layer 6 is triggered. Thus, the safety layer 6 generates additional heat acting upon the solder of the solder layers 7 and 8. Through this, the solder of the first solder layer 7 melts and the melted solder flows in the through holes 5 of the separator layer 4 to contact the electrically conductive safety layer 6 that is electrically connected to the second conductive layer 3 via the second solder layer 8. Thus, since the first conductive layer 2 is electrically connected to the first solder layer 7, the first conductive layer 2 is electrically connected to the second conductive layer 3.

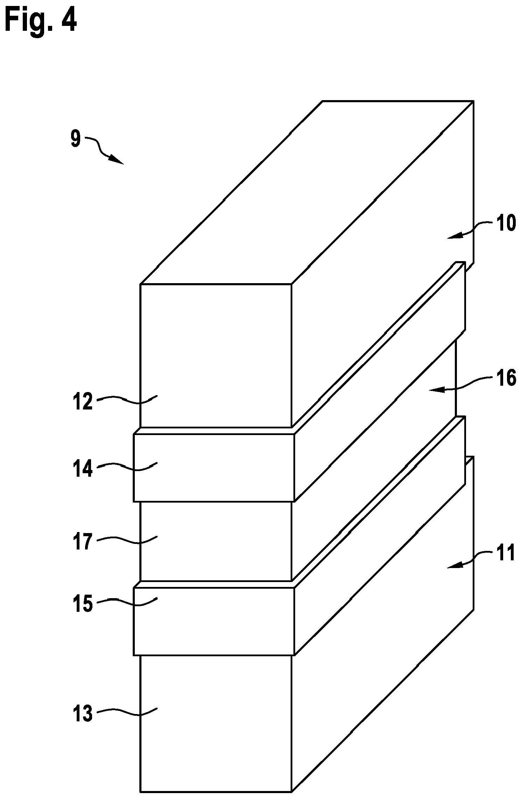

Figure 4 shows a schematic and perspective view of an embodiment of a rechargeable battery unit 9 according to the present invention. The rechargeable battery unit 9 comprises a battery cell 10 with a cell casing 11 and a safety device 16. The safety device 16 is arranged outside of the cell casing 11 and may be constructed according to the embodiment shown in Figures 1 to 3.

The cell casing 11 is ashlar-formed and the safety device 1 is located at two or more sides of the cell casing 11. Alternately, the safety device 1 is arranged at only one side of the cell casing 11. The cell casing 11 comprises a first cap-shaped terminal element 12 electrically connected to the first electrode (not shown) of the battery cell 10 and a second cap-shaped terminal element 13 electrically connected to the second electrode (not shown) of the battery cell 10 and being spaced apart from the first cap-shaped terminal element 12.

The first electrically conductive layer (not shown) of the safety device 16 is connected to a first electrode (not shown) of the battery cell 10 via a first planar-shaped connecting lug 14 by electrically connecting the first connecting lug 14 to the first cap-shaped terminal element 12. The second electrically conductive layer (not shown) of the safety device 16 is connected to a second electrode (not shown) of the battery cell 10 via a second planar-shaped connecting lug 15 by electrically connecting the second connecting lug 15 to the second cap-shaped terminal element 13. The safety device 16 comprises a sheathing 17 made from polyimide and accommodating the different layers of the safety device 16.

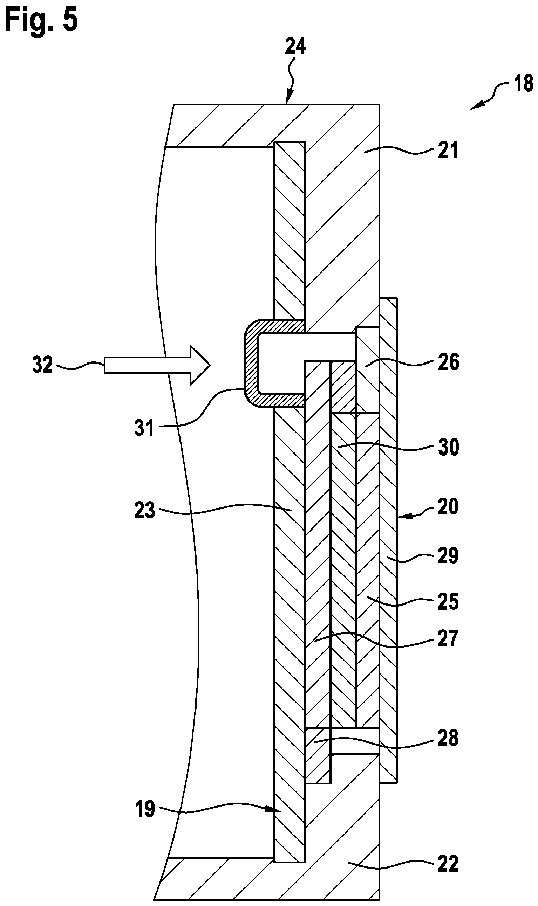

The first electrically conductive layer and the second electrically conductive layer of the battery cell 10 extend between side walls of the cap-shaped terminal elements 12 and 13, as shown in Figures 5 to 7. The first electrically conductive layer is electrically connected to the first cap-shaped terminal element 12 and may be spaced apart from the second cap-shaped terminal element 13. The second electrically conductive layer of the battery cell 10 is electrically connected to the second cap-shaped terminal element 13 and may be spaced apart from the first cap-shaped terminal element 12.

The rechargeable battery unit 9 may comprise at least one safety element (not shown) electrically connected to one of the electrodes of the battery cell 10 and being at least partly exposed to a pressure inside of the cell casing 11. In this case, the safety element may at least party deformed and/or displaced from a passive state in an active state, when the pressure in the cell casing 11 exceeds a predetermined threshold pressure. The safety element may electrically connect the one electrode of the battery cell 10 to the electrically conductive layer of the safety device 1 which is electrically connected to the other electrode of the battery cell 10.

Figure 5 shows a schematic partial cross section of a further embodiment of a rechargeable battery unit 18 according to the present invention in a passive state. The rechargeable battery unit 18 comprises a rechargeable battery cell 24 with a cell casing 19 and a safety device 20 which is arranged outside of the cell casing 19 and can be constructed according to the embodiment shown in Figures 1 to 3. For clarity the safety device 20 is shown in a simplified form without the solder layers and the separator layer.

The cell casing 19 is ashlar-formed. The cell casing 19 comprises a first cap-shaped terminal element 21 electrically connected to the first electrode (not shown) of the battery cell 24 and a second cap-shaped terminal element 22 electrically connected to the second electrode (not shown) of the battery cell 24 and being spaced apart from the first cap-shaped terminal element 21. Moreover, the cell casing 19 comprises a case element 23 accommodating the electrodes of the battery cell 24 and being open at the upper and lower end to enable an electrical connection of the electrodes of the battery cell 24 with the first cap-shaped terminal element 21 and the second cap-shaped terminal element 22, respectively.

The first electrically conductive layer 25 of the safety device 20 is connected to a first electrode of the battery cell 24 via a first planar-shaped connecting lug 26 by electrically connecting the first connecting lug 26 to the first cap-shaped terminal element 21. The second electrically conductive layer 27 of the safety device 20 is connected to a second electrode of the battery cell 24 via a second planar-shaped connecting lug 28 by electrically connecting the second connecting lug 28 to the second cap-shaped terminal element 22. The safety device 20 comprises a sheathing 29 made from polyimide and accommodating the different layers of the safety device 20.

The first electrically conductive layer 25 and the second electrically conductive layer 27 and the safety layer 30 of the battery cell 24 extend between side walls of the cap-shaped terminal elements 21 and 22. The first electrically conductive layer 25 is electrically connected to the first cap-shaped terminal 21 and is spaced apart from the second cap-shaped terminal element 22. The second electrically conductive layer 27 is electrically connected to the second cap-shaped terminal element 22 and is spaced apart from the first cap-shaped terminal element 21.

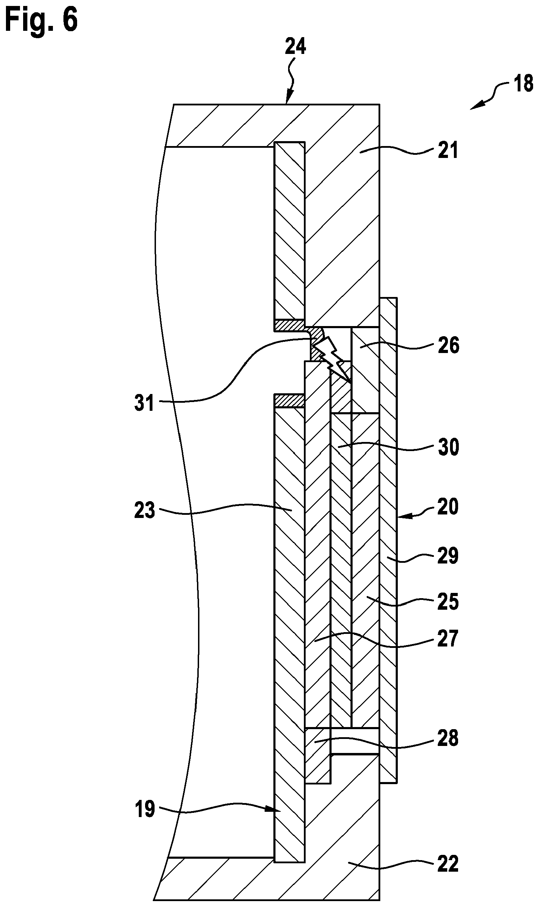

The rechargeable battery unit 18 comprises a safety element 31 electrically connected to one of the electrodes of the battery cell 24 via the first cap-shaped terminal element 21 and being at least partly exposed to a pressure inside of the cell casing 19, wherein the pressure is indicated by arrow 32. The safety element 31 is at least party deformed and/or displaced from a passive state in an active state, when the pressure in the cell casing 19 exceeds a predetermined threshold pressure, like is shown in Figure 6. In an activated state shown in Figure 6, the safety element 31 electrically connects the one electrode of the battery cell 24 to the second electrically conductive layer 27 of the safety device 20 which is electrically connected to the other electrode of the battery cell 24 via the second cap-shaped terminal element 22.

Figure 6 shows a schematic partial cross section of the embodiment shown in Figure 5 in an active state. In the active state, the safety element 31 is at least party deformed and/or displaced from a passive state in an active state due to the pressure in the cell casing 19 exceeding a predetermined threshold pressure. The safety element 31 electrically connects the one electrode of the battery cell 24 to the second electrically conductive layer 27 of the safety device 20 which is electrically connected to the other electrode of the battery cell 24 via the second cap-shaped terminal element 22. Therefore, a large discharge current can flow through the second electrically conductive layer 27, thereby generating heat, so that the safety layer 30 is heated and an exothermic reaction of the material of the safety layer 30 is triggered. Thus, the safety layer 30 generates additional heat acting upon the solder of the solder layers (not shown) of the safety device 20. Through this, the solder of the first solder layer melts and the melted solder flows in the through holes (not shown) of the separator layer to contact the electrically conductive safety layer 30 that is electrically connected to the second conductive layer 27 via the second solder layer. Thus, since the first conductive layer 25 is electrically connected to the first solder layer, the first conductive layer 25 is electrically connected to the second conductive layer 27.

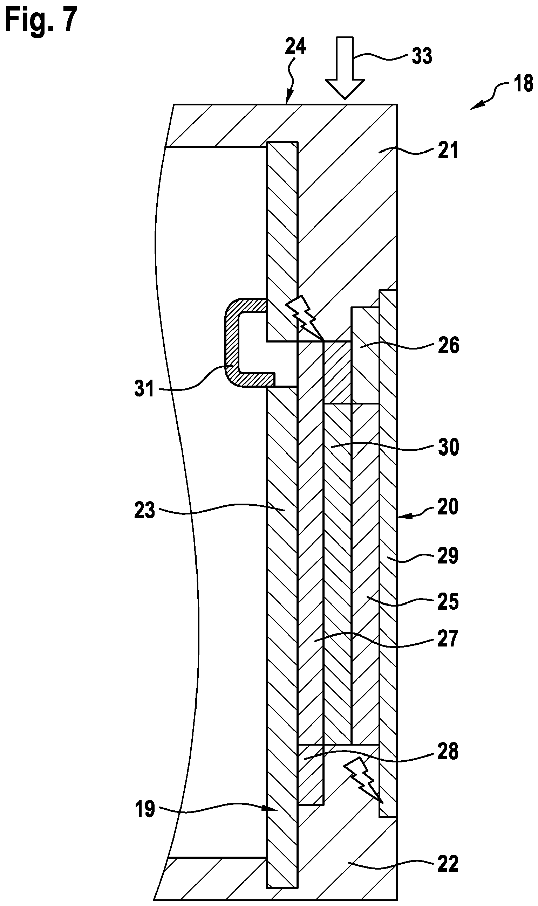

Figure 7 shows a schematic partial cross section of the embodiment shown in Figure 5 in a crushed state. In the crushed state, the first cap-shaped terminal element 21 is displaced by a force indicated by arrow 33 toward the second cap-shaped terminal element 22. Through this, the safety device 20 is crushed between side walls of the cap-shaped terminal elements 21 and 22. By this, both electrically conductive layers 25 and 27 electrically contact both cap-shaped terminal elements 21 and 22. Therefore, a large discharge current can flow through the electrically conductive layers 25 and 27, thereby generating heat, so that the safety layer 30 is heated and an exothermic reaction of the material of the safety layer 30 is triggered. Thus, the safety layer 30 generates additional heat acting upon the solder of the solder layers (not shown) of the safety device 20. Through this, the solder of the first solder layer melts and the melted solder flows in the through holes (not shown) of the separator layer to contact the electrically conductive safety layer 30 that is electrically connected to the second conductive layer 27 via the second solder layer. Thus, since the first conductive layer 25 is electrically connected to the first solder layer, the first conductive layer 25 is electrically connected to the second conductive layer 27.

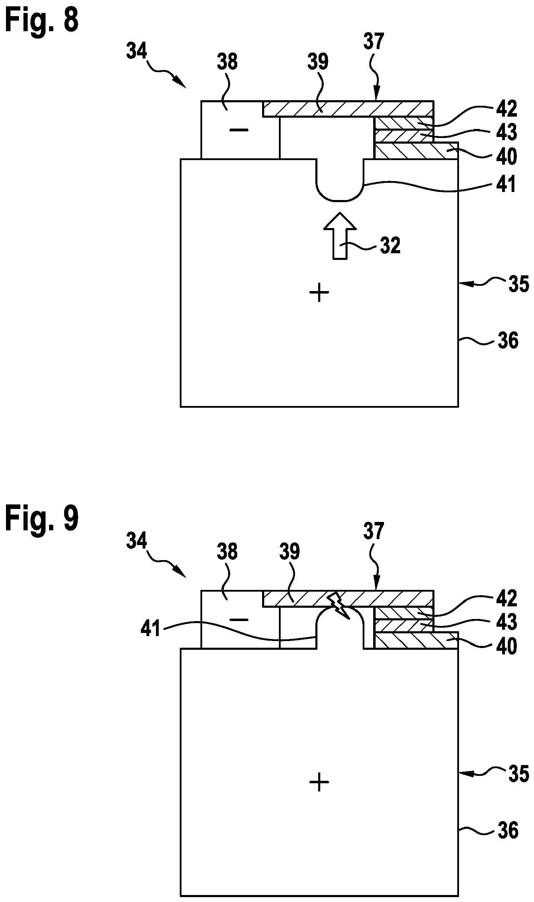

Figure 8 shows a schematic view of a further embodiment of a rechargeable battery unit 34 according to the present invention in a passive state. The rechargeable battery unit 34 comprises a rechargeable battery cell 35 with a cell casing 36 and a safety device 37 which is arranged outside of the cell casing 36 and can be constructed according to the embodiment shown in Figures 1 to 3. For clarity the safety device 37 is shown in a simplified form without the solder layers.

The cell casing 36 is ashlar-formed. The cell casing 36 comprises a negative polarized terminal 38 electrically connected to the first electrode (not shown) of the battery cell 35. The second electrode (not shown) of the battery cell 35 is electrically connected with the electrically conductive cell casing 36. Through this, the cell casing 36 is positive polarized.

The first electrically conductive layer 39 of the safety device 37 is connected to terminal 38. The second electrically conductive layer 40 of the safety device 37 is connected to the cell casing 36. The safety device 20 comprises a sheathing (not shown) made from polyimide and accommodating the different layers of the safety device 37.

The rechargeable battery unit 34 comprises a safety element 41 electrically connected to one of the electrodes of the battery cell 35 via the cell casing 36 and being at least partly exposed to a pressure inside of the cell casing 36, wherein the pressure is indicated by arrow 32. The safety element 41 is at least party deformed and/or displaced from the shown passive state in an active state (shown in Figure 9), when the pressure in the cell casing 36 exceeds a predetermined threshold pressure, like is shown in Figure 9.

Figure 9 shows a schematic view of the embodiment shown in Figure 8 in an active state. In the active state, the safety element 41 is at least party deformed and/or displaced from the passive state (shown in Figure 8) in a shown active state due to the pressure in the cell casing 36 exceeding a predetermined threshold pressure. The safety element 41 electrically connects the first electrically conductive layer 39. Therefore, a large discharge current can flow through the safety element 41, thereby generating heat, so that the safety layer 42 and the separator layer 43 are heated and an exothermic reaction of the material of the safety layer 42 is triggered. Thus, the safety layer 42 generates additional heat acting upon the solder of the solder layers (not shown) of the safety device 37. Through this, the solder of the first solder layer melts and the melted solder flows in the through holes (not shown) of the separator layer 43 to electrically contact the first electrically conductive layer 39 to the second electrically conductive layer 40.

## Claims

1. A safety device (1, 16, 20, 37) for a rechargeable battery cell (10, 24, 35), comprising:
- at least one first electrically conductive layer (2, 25, 39) electrically connectable to a first electrode of the battery cell (10, 24, 35);
- at least one second electrically conductive layer (3, 27, 40) electrically connectable to a second electrode of the battery cell (10, 24, 35);
- at least one separator layer (4, 43) with at least one through hole (5) and being arranged between the first electrically conductive layer (2, 25, 39) and the second electrically conductive layer (3, 27, 40) to electrically separate the first electrically conductive layer (2, 25, 39) from the second electrically conductive layer (3, 27, 40);
- at least one first solder layer (7) which is at least partly arranged between the first electrically conductive layer (2, 25, 39) and the separator layer (4, 43);
- at least one safety layer (6, 30, 42) which is at least partly arranged between the separator layer (4, 43) and the second electrically conductive layer (3, 27, 40); and
- at least one second solder layer (8) which is at least partly arranged between the second electrically conductive layer (3, 27, 40) and the safety layer (6, 30, 42),
- wherein the safety layer (6, 30, 42) is formed so that, when a temperature of the safety layer (6, 30, 42) exceeds a predetermined threshold temperature, an exothermic reaction of the safety layer material is triggered, and
- the first solder layer (7) is melted due to heat generated by the exothermic reaction and/or the separator layer (4, 43) changes its state of matter from solid to liquid or gas due to heat generated by the exothermic reaction.

2. The safety device (1, 16, 20, 37) according to claim 1, further comprising
- at least one sheathing (17, 29) at least partly accommodating the first electrically conductive layer (2, 25, 39), the second electrically conductive layer (3, 27, 40), the separator layer (4, 43), the first solder layer (7), the safety layer (6, 30, 42) and the second solder layer (8),
- wherein only a first planar-shaped connecting lug (14, 26) electrically connected to the first electrically conductive layer (2, 25, 39) and a second planar-shaped connecting lug (15, 28) electrically connected to the second electrically conductive layer (3, 27, 40) protrude from the sheathing (17, 29).

3. A rechargeable battery unit (9, 18, 34), comprising:
- at least one rechargeable battery cell (10, 24, 35) with a cell casing (11, 19, 36); and
- at least one safety device (1, 16, 20, 37) according to claim 1 or 2,
- wherein the safety device (1, 16, 20, 37) is arranged inside or outside of the cell casing (11, 19, 36),
- the at least one first electrically conductive layer (2, 25, 39) of the safety device (1, 16, 20, 37) is electrically connected to a first electrode of the battery cell (10, 24, 35) and the at least one second electrically conductive layer (3, 27, 40) of the safety device (1, 16, 20, 37) is electrically connected to a second electrode of the battery cell (10, 24, 35).

4. The battery unit (9, 18, 34) according to claim 3, further comprising
- at least one safety element (31, 41) electrically connected to one of the electrodes of the battery cell (10, 24, 35) and being at least partly exposed to a pressure inside of the cell casing (11, 19, 36),
- wherein the safety element (31, 41) is at least party deformed and/or displaced from a passive state in an active state, when the pressure in the cell casing (11, 19, 36) exceeds a predetermined threshold pressure, and
- the safety element (31, 41) electrically connects the one electrode of the battery cell (10, 24, 35) to the electrically conductive layer (2, 3, 25, 27, 39, 40) of the safety device (1, 16, 20, 37) which is electrically connected to the other electrode of the battery cell (10, 24, 35).

5. The battery unit (9, 18) according to claim 3 or 4, wherein
- the cell casing (11, 19) comprises a first cap-shaped terminal element (12, 21) electrically connected to the first electrode of the battery cell (10, 24) and a second cap-shaped terminal element (13, 22) electrically connected to the second electrode of the battery cell (10, 24) and being spaced apart from the first cap-shaped terminal element (12, 21),
- the first electrically conductive layer (2, 25) and the second electrically conductive layer (3, 27) extend between side walls of the cap-shaped terminal elements (12, 13, 21, 22),
- the first electrically conductive layer (2, 25) is electrically connected to the first cap-shaped terminal element (12, 21) and is spaced apart from the second cap-shaped terminal element (13, 22), and
- the second electrically conductive layer (3, 27) is electrically connected to the second cap-shaped terminal element (13, 22) and is spaced apart from the first cap-shaped terminal element (12, 21).

6. The battery unit (9, 18, 34) according to any one of claims 3 to 5, wherein the cell casing (11, 19, 36) is ashlar-formed and the safety device (1, 16, 20, 37) is located at two or more sides of the cell casing (11, 19, 36).
